# EUROPÄISCHE PATENTSCHRIFT

(11) **EP 1 046 839 B1**
(45) Veröffentlichungstag und Bekanntmachung des Hinweises auf die Patenterteilung: **16.07.2003**
(21) Anmeldenummer: 00108563.8
(22) Anmeldetag: 19.04.2000
(51) Int. Cl.: F16H 59/10

(54) **Verfahren zum Abgleichen eines Positionserkennungssensors**
Method for calibrating of a position sensor
Procédé de calibration d'un capteur de position

(30) Priorität: 20.04.1999 DE 19917873
(43) Veröffentlichungstag der Anmeldung: 25.10.2000
(73) Patentinhaber: SIEMENS AKTIENGESELLSCHAFT, 80333 München (DE)
(72) Erfinder: Loibl, Josef, 94209 Regen (DE)

(56) Entgegenhaltungen:
- DE-A- 4 340 917
- DE-C- 19 603 197
- US-A- 4 698 996
- US-A- 5 621 317
- ERB O ET AL: "PLCD, A NOVEL MAGNETIC DISPLACEMENT SENSOR" SENSORS AND ACTUATORS A,CH,ELSEVIER SEQUOIA S.A., LAUSANNE, Bd. A26, Nr. 1 / 03, 1. März 1991 (1991-03-01), Seiten 277-282, XP000246482 ISSN: 0924-4247

## Beschreibung

Die Erfindung betrifft ein Verfahren zum Abgleichen eines Positionserkennungssensors in einem Kraftfahrzeug-Automatikgetriebe.

Automatikgetriebe für Personenkraftfahrzeuge werden üblicherweise elektronisch gesteuert. Die Steuergeräte hierfür waren bisher als sogenannte "Stand-alone-Einheiten" in einem vor Umwelteinflüssen schützenden Steuerkasten vorgesehen oder wurden direkt im Passagierraum des Fahrzeugs verbaut. In jüngster Zeit wird dazu übergegangen, die Steuerelektronik und die zugehörige Sensorik aus Kosten- und Qualitätsgründen direkt in das Automatikgetriebe zu integrieren. Grundlegende Systemanforderungen für den Betrieb der Elektronik im Getriebe sind die Funktionsfähigkeit über einen breiten Temperaturbereich, z. B. -40°C bis 140°C, die Dichtheit gegenüber Getriebe-ATF-Öl und eine ausreichende Vibrationsfestigkeit, z. B. 30g. Eine optimierte Temperaturauslegung wird dadurch erreicht, daß die Elektronikschaltung auf dem Keramik-Substrat mit einem Wärmeleitkleber auf eine Metallgrundplatte, z. B. aus Aluminium, aufgeklebt wird.

Neben Drehzahlsensoren, Drucksensoren und Temperatursensoren weisen übliche Getriebesteuerungen für Automatikgetriebe einen Positionserkennungssensor auf, mit dem erfaßt wird, welcher Fahrbereich des Automatikgetriebes eingestellt ist. Letzeres erfolgt beispielsweise durch eine Einstellung des sogenannten Wählbereichschalters in eine der Positionen "P" (= Park), "R" (= Retour), "N" (= Neutral) oder "D" (= Drive). Der Wählbereichsschalter - im folgenden auch Wählhebel genannt - ist an das Automatikgetriebe mechanisch angebunden, indem er einen linear oder rotatorisch beweglichen Wählschieber betätigt. Dieser ist in den hydraulischen Teil der Getriebesteuerung eingebunden. Durch die Erfassung der Wählschieberposition mittels des Positionserkennungssensors wird dem elektronischen Steuergerät die eingestellte Fahrstufe mitgeteilt.

Bezüglich der Positionserkennung ist es nun bekannt, einen eigenständigen Sensor vorzusehen, der zum Schutz vor dem Umgebungsmedium, nämlich Getriebeöl, öldicht in einem Gehäuse verpackt ist. Auch die elektrische Verbindung des Sensors über entsprechende Leitungen zum Steuergerät muß öldicht ausgelegt sein.

Für die Ausgestaltung der Sensoren sind verschiedene Meßprinzipien denkbar. Aus der Druckschrift DE 196 03 197 C1 ist die Verwendung von Magnetfeldsensoren bekannt, die auf dem Hall-Effekt basieren. Bei derartigen Anordnungen wird die Meßqualität erheblich vom Luftspalt zwischen Magnet und Sensorelement beeinflußt. Daher ist ein als Schieber ausgebildetes Auslöseorgan (PES-Schieber), in dem eine codierte Magnetplatte oder ein Gebermagnet integriert ist, toleranzgenau in Führungsnuten des Sensorgehäuses geführt. In den PES-Schieber greift der getriebeinterne Wählschieber ein, der über ein Gestänge oder einen Bowdenzug starr mit dem Wählhebel im Fahrzeuginnenraum verbunden ist. Wird der Wählhebel von einer Position in eine andere bewegt, so wird über den Wählschieber im Getriebe auch der bewegliche PES-Schieber verstellt, so daß die Getriebeelektronik die neue Wählhebel-Stellung einlesen kann.

Auf dem Hall-Effekt basierende Positionserkennungssensoren sind ebenso wie elektromechanisch auf dem Schalter- oder Schleifer-Prinzip beruhende Positionserkennungssensoren ausschließlich digital ausgeführt. Die Absolutgenauigkeit des Systems ergibt sich entsprechend einer Kette von Toleranzen der beteiligten Elektronik- und Mechanikkomponenten. Eine statische Korrektur nach dem Einbau in das Fahrzeug oder Getriebe oder eine dynamische Korrektur im Betrieb ist nicht mehr möglich.

Aus der Druckschrift DE 43 40 917 A ist eine elektrische Schaltungsanordnung mit einem Positionserkennungssensor und einer Steuerelektronik bekannt, bei der der Positionserkennungssensor abhängig von der Position eines Wählschiebers ein analoges Ausgangssignal liefert. Ein Abgleich des Sensors gemäß dem Oberbegriff des Anspruch 1 kann jederzeit mit Hilfe eines Programms in der Steuerelektronik vorgenommen werden.

Der Erfindung liegt das technische Problem zugrunde, ein Verfahren zu schaffen, das einen Abgleich eines Positionserkennungssensors während des Betriebs im Fahrzeug ermöglicht.

Dieses Problem wird durch ein Verfahren mit den Merkmalen des Patentanspruchs 1 gelöst. Vorteilhafte Weiterbildungen der Erfindung sind in den Unteransprüchen niedergelegt.

Für Positionserkennungssensoren sind neben digitalen (Hall-Sensor) auch analoge Sensorprinzipien, z. B. auf Basis eines PLCD (permanentmagnetic linear conatctless displacementsensor), bekannt. Ein PLCD basiert auf einer Spulenanordnung, die eine integrierte elektronische Auswerteschaltung, z. B. als ASIC-Baustein, enthält und auf Basis der Lage von Gebermagneten relativ zum Sensor ein analoges Ausgangssignal, vorzugsweise ein Spannungssignal, erzeugt. Ein derartiger Baustein wird z.B. von der Firma Siemens vertrieben und ist beispielsweise aus dem Aufsatz "PLCD,A Novel Magnetic Displacement Sensor" von O. Erb, G. Hinz und N. Preusse, Sensors and Actuators A, CH, Elsevier Sequoia S.A., Lausanne, März 1991, Seiten 277 bis 282, bekannt.

Bei Positionserkennungssensoren ist die Genauigkeit mit der die Wählbereiche (P, R, N oder D) erfaßt werden können, ein entscheidendes Qualitätsmerkmal. Im Gegensatz zu digitalen Positionserkennungssensoren hat man bei analogen Positionser kennungssensoren die Möglichkeit, den Sensor statisch oder dynamisch abzugleichen, um so die Genauigkeit im System zu erhöhen. Wird hierzu ein Selbstlernalgorithmus eingesetzt, so kann der Abgleich des Sensors vollkommen selbständig während des Betriebs im Fahrzeug erfolgen. Auf diese Weise werden Einbautoleranzen und Alterungseffekte des Positionserkennungssensors im Getriebe weitgehend eliminiert.

Ein Ausführungsbeispiel der Erfindung wird im folgenden anhand der Figuren erläutert. Es zeigen:
- Figur 1: eine schematische Darstellung eines Steuergerätes mit Mitteln zur Positionserfassung,
- Figur 2: eine Schrägansicht eines Positionserkennungssensors mit PLCD-Sensorelementen,
- Figur 3: eine Kennlinie des Ausgangssignals des PLCD-Sensorelements,
- Figur 4: eine schematische Darstellung der Wählbereiche eines Positionserkennungssensors und
- Figur 5: ein Flußdiagramm des erfindungsgemäßen Selbstlernalgorithmus.

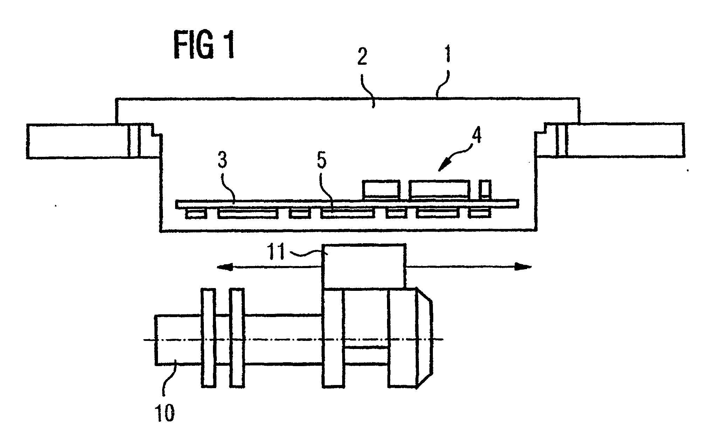

Ein elektronisches Steuergerät für ein Automatikgetriebe eines Kraftfahrzeugs weist ein Gehäuse 1 auf (Figur 1). Der Innenraum 2 des Gehäuses 1 ist hermetisch gegen Flüssigkeitseintritt, also insbesondere öldicht verschlossen. Im Innenraum 2 ist ein Schaltungsträger 3, z.B. eine Platine oder eine Flex-Leiterfolie, mit einer, schematisch durch Bauelemente dargestellten Steuerelektronik 4 untergebracht. Ein Positionserkennungssensor 5, der als PLCD ausgeführt ist, und gegebenenfalls noch eine Ansteuer- und Auswerteelektronik aufweist ist ebenfalls im Innenraum 2 des Gehäuses 1 angeordnet. Vorteilhaft ist der Positionserkennungssensor 5 unmittelbar auf dem Schaltungsträger 3 der Steuerelektronik 4 angeordnet.

Mit Hilfe des Positionserkennungssensors 5 kann die Position eines Wählschiebers 10, der über ein Gestänge oder einen Bowdenzug starr mit einem nichtdargestellten Wählhebel im Fahrzeuginnenraum verbunden ist, erfaßt und der Steuerelektronik mitgeteilt werden. Bei Verwendung von induktiven Sensoren, wie z. B. einem PLCD, ist der Luftspalt zwischen Geberelement und Sensorelement deutlich unkritischer als bei bekannten Hall-Sensoren. Ein Gebermagnet 11 kann daher unmittelbar auf dem Wählschieber 10 montiert werden. Eine toleranzgenaue Führung in einem zusätzlichen PES-Schieber ist nicht zwingend notwendig.

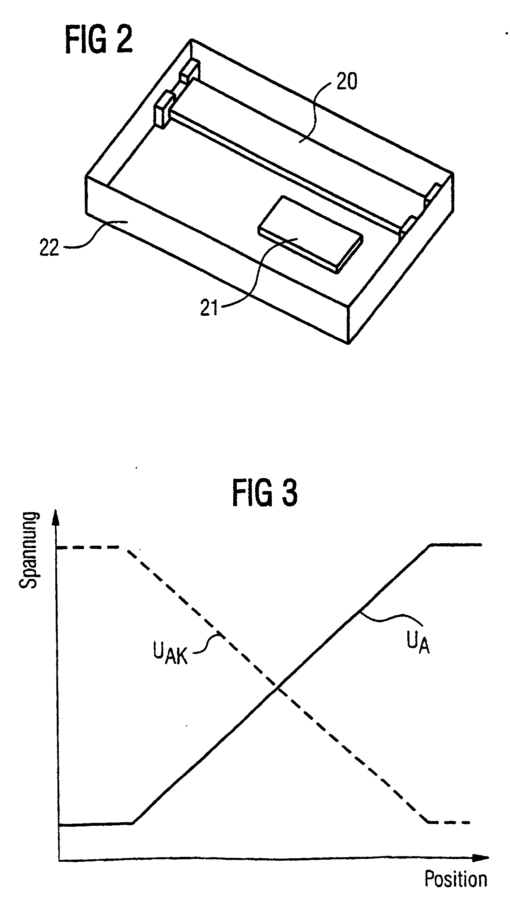

Erfindungsgemäß wird für die Erkennung der Position des Wählschiebers 10 ein analoges Sensorprinzip, z. B. auf Basis eines PLCD, verwendet. Ein derartiger Sensor basiert auf einer Spulenanordnung 20, die zusammen mit einer integrierten elektronischen Auswerteschaltung 21, z. B. in Form eines ASIC-Bausteins, in einem Sensorgehäuse 22 untergebracht ist (Figur 2).

In Figur 3 ist ein mögliches Ausgangssignal des PLCD in Abhängigkeit von der Position des Wählschiebers 10 dargestellt. Dabei kann der Ausgang des Sensorelements aus Sicherheitsgründen als redundante Differenzschnittstelle ausgeführt sein. Dadurch ergibt sich neben einem Ausgangsspannungssignal U_{A} ein Komplementär-Signal U_{AK}. Durch Vergleich des Ausgangsspannungssignal U_{A} mit dem Komplementär-Signal U_{AK} lassen sich Fehlfunktionen des PLCD erkennen. Das lineare Spannungssignal kann durch einen in den PLCD-Baustein integrierten A/D-Wandler auch innerhalb des PLCD in diskrete Ausgangswerte umgesetzt werden. Der Ausgang des Sensorelements ist dann als serielle Schnittstelle oder Busschnittstelle ausgeführt.

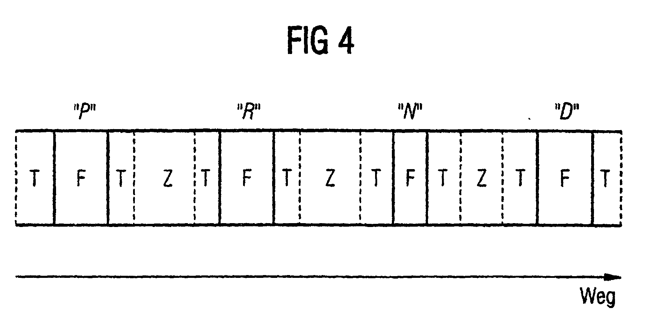

Durch den Wählschieber 10 mit dem Gebermagnet 11 werden linear angeordnete Schaltpunkte vorgegeben. Dabei wird zwischen Fahrstellungen F, Zwischenstellungen Z und Toleranzbereichen T unterschieden (Figur 4). Da der Positionserkennungssensor im Getriebe eines Kraftfahrzeugs ein sicherheitskritisches Teil darstellt, muß eine hohe Zuverlässigkeit und Funktionssicherheit des Positionserkennungssensors gewährleistet sein. Fahrstellungen F und Zwischenstellungen Z des Wählschiebers müssen eindeutig erkannt werden. Im Gegensatz zu digitalen Positionserkennungssensoren, z. B. mit Hall-Elementen, hat man bei analogen Positionserkennungssensoren die Möglichkeit, den Sensor statisch oder dynamisch abzugleichen, um so die gewünschte Systemgenauigkeit sicherzustellen.

Für den Sensorabgleich sind dabei mehrere Varianten möglich:

### 1. Grobabgleich während der Produktion des Positionserkennungssensors:

In einer Kalibrierstation werden die Wählbereiche mit einem reproduzierbaren Normprozess durchfahren und per Kennlinienanpassung die Ausgangsspannungen derart eingestellt, daß den Schaltstellungen P, R, N und D Wählbereiche in Form von Spannungsbändern zugeordnet werden. Diese Spannungsbänder werden dauerhaft in einen nichtflüchtigen Speicher der elektronischen Auswerteschaltung 21 des Positionserkennungssensors 5 abgelegt. Auf diese Weise können Fertigungstoleranzen des Positionserkennungssensors 5 weitgehend eliminiert werden. Ist die Grundgenauigkeit der Sensoren bereits ausreichend, das heißt die Fertigungstoleranzen genügend klein, so kann der Grobabgleich entfallen.

### 2. Feinabgleich während der Produktion des Kraftfahrzeugs:

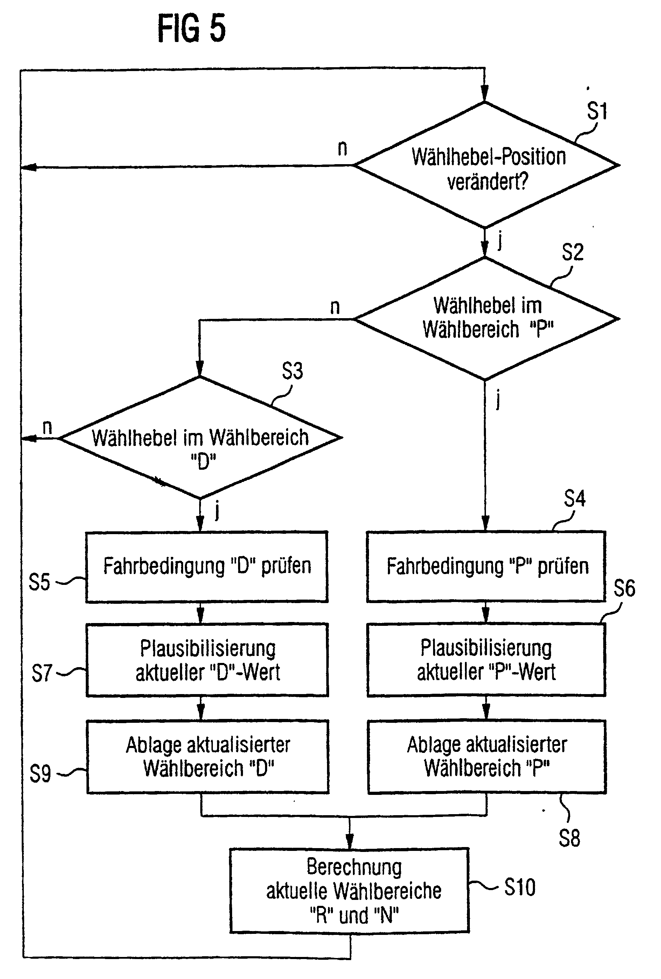

In jedem gefertigten Kraftfahrzeug wird ein separater Eichvorgang durchgeführt. Dieser Eichvorgang führt z. B. über ein Startsignal über eine serielle Schnittstelle des Positionserkennungssensors 5 eingeleitet. Mindestens zwei der vorhandenen Schaltstellungen, vorzugsweise die Endstellungen P und D, werden jeweils angefahren und der korrespondierende Signalpegel oder Spannungswert wird in einem nichtflüchtigen Speicher in der Steuerelektronik 4 abgelegt. Auf Basis der gespeicherten Werte werden die Signalpegel- oder Spannungsbänder für die jeweils angefahrenen Schaltstellungen aktualisiert. Die Spannungsbänder für die nicht angefahrenen Schaltstellungen können aufgrund der linearen Anordnung der Schaltpunkte mit ausreichender Genauigkeit berechnet werden und die korrespondierenden Spannungswerte können ebenfalls in dem nichtflüchtigen Speicher abgelegt werden. Durch Anfahren aller vorhandenen Schaltstellungen wird eine maximale Genauigkeit der korrespondierenden Spannungswerte sichergestellt. Durch den Feinabgleich des Positionserkennungssensors während der Produktion des Kraftfahrzeugs ist es möglich, Einbautoleranzen im Getriebe und Fahrzeug größtenteils zu eliminieren. Hierzu sind jedoch spezielle Prüfstände und zusätzliche Zeit im Produktionsablauf notwendig. Eine vorteilhafte Alternative zum Feinabgleich des Sensors während der Kraftfahrzeug-Produktion ist im folgenden anhand von Figur 5 näher erläutert.

### 3. Feinabgleich des Positionserkennungssensors während des Betriebs im Fahrzeug (Selbstlernalgorithmus):

Der Selbstlernalgorithmus ist beispielhaft für die meßtechnische Bestimmung der korrespondierenden Signalpegel oder Spannungswerte zu den Wählbereichen P und D dargestellt. Die Signalpegel-Bänder für die übrigen Wählbereiche R und N können aufgrund der linearen Anordnung der Schaltpunkte berechnet werden. Das erfindungsgemäße Verfahren ist aber auf jede Kombination von mindestens zwei der vorhandenen Wählbereiche P, R, N und D anzuwenden. Eine maximale Genauigkeit wird erreicht, wenn keiner der Wählbereiche berechnet wird, sondern alle meßtechnisch nach dem im folgenden beschriebenen Verfahren ermittelt werden.

In einem Schritt S1 wird kontinuierlich oder periodisch überprüft, ob die Position des Wählhebels und damit der Wählschiebers verändert wurde (Figur 5). Wird eine Veränderung festgestellt, so wird in Schritten S2 und S3 geprüft, ob sich der Wählhebel in einem der Wählbereiche P oder D befindet. Hierzu wird die Ausgangsspannung des Positionserkennungssensors mit jeweils unteren und oberen Spannungsgrenzwerten der Wählbereiche P und D verglichen..Ergibt sich dabei, daß der Wählhebel sich in einem der Wählbereiche P oder D befindet, so werden in Schritten S4 und S5 die Fahrbedingungen des jeweiligen Wählbereichs überprüft. Während im Wählbereich D beispielsweise geprüft wird, ob die Fahrzeuggeschwindigkeit oberhalb eines vorgegebenen Grenzwertes liegt, wird im Wählbereich P sichergestellt, daß sowohl die Fahrzeuggeschwindigkeit als auch die Motordrehzahl gleich Null sind. Sind die Fahrbedingungen in den detektierten Wählbereichen erfüllt, so werden die aktuellen Spannungswerte in Schritten S6 und S7 plausibilisiert. Um z. B. die Aufnahme von Spannungsspitzen zu vermeiden, kann hierbei beispielsweise das Anliegen des aktuellen Spannungswerts über eine vorgegebene Zeitspanne gefordert werden. Ebenso ist eine Mittelwertbildung aus mehreren aufeinanderfolgenden Spannungswerten denkbar. Werden die aktuellen D- oder P-Werte für plausibel gehalten, so werden die aktuell ermittelten Spannungswerte für die Wählbereiche in einem nichtflüchtigen Speicher der Steuerelektronik 4 abgelegt (Schritte S8 und S9). Auf Basis dieser Werte werden die Spannungsbänder für die jeweiligen Wählbereiche kontinuierlich aktualisiert. In einem Schritt S10 werden auf Basis der aktualisierten Wählbereiche Spannungsbänder für die übrigen Wählbereiche R und N berechnet. Eine maximale Genauigkeit des Abgleichs des Positionserkennungssensors wird erreicht, wenn neben den Wählbereichen P und D auch die Wählbereiche R und N nach dem vorher beschriebenen Verfahren ermittelt werden. Eventuelle Ungenauigkeiten durch die Berechnung von Wählbereichen (Schritt S10) werden dadurch eliminiert.

Ein analoges Verfahren ist auch anzuwenden, wenn der Ausgang des Positionserkennungssensors 5 als serielle Schnittstelle oder Busschnittstelle ausgeführt ist und diskrete Ausgangswerte an die Steuerelektronik 4 übermittelt werden.

Der Feinabgleich eines analogen Positionserkennungssensors während des Betriebs im Fahrzeug (Selbstlernalgorithmus) bietet den großen Vorteil, daß Einbautoleranzen im Getriebe und Fahrzeug mit geringem Aufwand weitgehend eliminiert werden. Ebenso werden Alterungseffekte durch die kontinuierliche Aktualisierung der Spannungsbänder für die einzelnen Wählbereiche kompensiert. Durch Verwendung eines analogen Positionserkennungssensors in Verbindung mit dem erfindungsgemäßen Selbstlernalgorithmus können die Wählbereiche eines Automatikgetriebes im Gegensatz zu digitalen Positionserkennungssensoren weitgehend unabhängig von Toleranzen des Gesamtsystems sehr genau erfaßt werden.

## Patentansprüche

1. Verfahren zum Abgleichen eines Positionserkennungssensors (5), der abhängig von der Position eines Kraftfahrzeug-Automatikgetriebe-Wählschiebers (10) ein analoges Ausgangssignal liefert,
- bei dem überprüft wird, ob die Position des Wählschiebers (10) verändert wurde,
- bei dem geprüft wird, ob sich der Wählschieber (10) im Falle einer Positionsveränderung in einem von mindestens zwei vorgegebenen Wählbereichen (P, D) befindet,
- bei dem der Signalpegel des Ausgangssignals des Positionserkennungssensors (5) in einem Speicher abgelegt wird, falls sich der Wählschieber (10) in einem der vorgegebenen Wählbereiche (P, D) befindet, **dadurch gekennzeichnet, daß**
- auf Basis der gespeicherten Signalpegel aktualisierte Signalpegel-Bänder für die jeweiligen Wählbereiche (P, D) bestimmt werden und
- auf Basis der gespeicherten Signalpegel Signalpegel-Bänder für die übrigen Wählbereiche (R, N) des Wählschiebers (10) berechnet werden und die korrespondierenden Signalpegel ebenfalls in einem Speicher abgelegt werden.

2. Verfahren nach Anspruch 1, **dadurch gekennzeichnet, daß** der Signalpegel des Ausgangssignals des Positionserkennungssensors (5) nur dann in einem Speicher abgelegt wird, wenn vorgegebene Fahrbedingungen des jeweiligen Wählbereichs erfüllt sind.

3. Verfahren nach Anspruch 2, **dadurch gekennzeichnet, daß** der Signalpegel des Ausgangssignals des Positionserkennungssensors (5) nur dann in einem Speicher abgelegt wird, wenn der Signalpegel für plausibel gehalten wird.

## Claims

1. Method for adjusting a position detection sensor (5) which supplies an analogue output signal as a function of the position of a selector slide (10) of the automatic transmission of a motor vehicle,
- in which it is checked whether the position of the selector slide (10) has changed,
- in which it, in the case of a changing position, is tested whether the selector slide (10) is located in one of at least two predefined selection ranges (P, D),
- in which the signal level of the output signal of the position detection sensor (5) is stored in a memory if the selector slide (10) is in one of the predefined selection ranges (P, D),
- **characterized in that** signal level bands, which are updated on the basis of the stored signal level, are determined for the respective selection ranges (P, D), and
- signal level bands are calculated for the other selection ranges (R, N) of the selector slide (10) on the basis of the stored signal levels, and the corresponding signal levels are also stored in a memory.

2. Method according to Claim 1, **characterized in that** the signal level of the output signal of the position detection sensor (5) is stored in a memory only if predefined driving conditions of the respective selection range are fulfilled.

3. Method according to Claim 2, **characterized in that** the signal level of the output signal of the position detection sensor (5) is stored in a memory only if the signal level is considered plausible.

## Revendications

1. Procédé de réglage d'un détecteur de position (5) qui délivre un signal analogique de sortie en fonction de la position d'un coulisseau de sélection (10) d'une transmission automatique d'un véhicule automobile, dans lequel:
- on vérifie si la position du coulisseau de sélection (10) a été modifiée,
- on vérifie si le coulisseau de sélection (10) se trouve dans au moins l'une de deux plages de sélection (P, D) prédéterminées, dans le cas d'une modification de position,
- le niveau du signal de sortie du détecteur de position (5) est conservé dans une mémoire si le coulisseau de sélection (10) se trouve dans l'une des plages de sélection (P, D) prédéterminées,
**caractérisé en ce que**
- sur la base du niveau du signal conservé en mémoire, des bandes de niveau actualisées de signal sont déterminées pour chacune des plages de sélection (P, D), et
- sur la base des niveaux de signal conservés en mémoire, des bandes de niveau de signal pour les autres plages de sélection (R, N) du coulisseau de sélection (10) sont calculées, et les niveaux de signal correspondants sont également conservés dans une mémoire.

2. Procédé selon la revendication 1, **caractérisé en ce que** le niveau du signal de sortie du détecteur de position (5) n'est conservé dans une mémoire que si des conditions prédéterminées de roulage sont remplies pour chaque plage de sélection.

3. Procédé selon la revendication 2, **caractérisé en ce que** le niveau du signal de sortie du détecteur de position (5) n'est conservé dans une mémoire que si le niveau du signal est considéré comme étant plausible.
